# EUROPEAN PATENT SPECIFICATION

(11) **EP 4 200 822 B1**
(45) Date of publication and mention of the grant of the patent: **04.06.2025**
(21) Application number: 21858821.8
(22) Date of filing: 09.08.2021
(51) Int. Cl.: G07F 11/58, G07F 11/16, G07F 11/42, G06Q 10/087, G07F 11/60

(54) **PRODUCT DELIVERY MECHANISM FOR A VENDING MACHINE**
PRODUKTAUSGABEMECHANISMUS FÜR EINEN VERKAUFSAUTOMATEN
MÉCANISME DE DISTRIBUTION DE PRODUITS POUR DISTRIBUTEUR AUTOMATIQUE

(30) Priority: 19.08.2020 US 202016997037
(43) Date of publication of application: 28.06.2023
(73) Proprietor: PepsiCo, Inc., Purchase, New York 10577 (US)
(72) Inventor: STOENESCU, Eleonor Dorin, Stamford, CT 06902 (US)
(74) Representative: Maiwald GmbH
(86) International application number: PCT/US2021/045217
(87) International publication number: WO 2022/039958

(56) References cited:
- EP-A2- 1 947 619
- EP-A2- 1 947 619
- JP-B2- 4 263 858
- US-A1- 2003 057 226
- US-A1- 2005 284 880
- US-A1- 2008 061 076
- US-A1- 2011 068 116
- US-A1- 2014 291 346
- US-A1- 2018 174 392
- US-B1- 6 520 604

## Description

### FIELD

Embodiments described herein generally disclose product delivery mechanisms for vending machines. Specifically, embodiments described herein relate to product delivery mechanisms that include a product retrieval assembly that is movable within the vending machine and that is configured to drive an advancing assembly on which a product is stored in order to retrieve the product and convey the product to a delivery portal.

### BACKGROUND

Vending machines generally include a housing that defines a product storage area in which products available for purchase are stored. The consumer may provide a payment and make a product selection using a user interface of the vending machine. Once the consumer selects a product, a delivery mechanism of the vending machine conveys the product to a delivery portal of the vending machine so that the dispensed product can be accessed by the consumer.

Various types of delivery mechanisms may be used to convey products to the consumer. Delivery mechanisms may be selected depending on the type of products to be dispensed, and the cost of the vending machine, among other factors. Delivery mechanisms may vary in complexity and may be a significant factor contributing to the overall cost of manufacturing the vending machine.

While it is generally desirable to minimize manufacturing costs, it is important to ensure that the delivery mechanism functions properly to convey products to the delivery portal for access by the consumer. If the delivery mechanism fails to retrieve and convey the selected product to the delivery portal, the consumer may be unable to access their product and may have a bad experience. Conversely, the delivery mechanism may accidentally dispense multiple products, resulting in dispensing of products that have not been paid for and loss of revenue. The delivery mechanism may add to the consumer's overall experience and satisfaction. Some vending machines may include a delivery mechanism that is visible by the consumer so that the consumer may view the delivery mechanism retrieve the product and carry the product to the delivery portal. Document US 2005/284880 A1 discloses a vending machine.

### BRIEF SUMMARY OF THE INVENTION

The present invention is defined by the appended independent claims. Advantageous embodiments are defined by the dependent claims.

### BRIEF DESCRIPTION OF THE DRAWINGS/FIGURES

The accompanying drawings, which are incorporated herein and form a part of the specification, illustrate the present disclosure and, together with the description, further serve to explain the principles thereof and to enable a person skilled in the pertinent art to make and use the same.
FIG. 1 shows a front view of a vending machine having a delivery mechanism according to an embodiment.
FIG. 2 shows a front view of product storage area of a vending machine and a delivery mechanism according to an embodiment.
FIG. 3 shows a perspective view of an advancing assembly of a vending machine according to an embodiment.
FIG. 4 shows a perspective view of a delivery mechanism according to an embodiment.
FIG. 5 shows a front view of a belt-driven x-y mechanism according to an embodiment.
FIG. 6 shows a side view of a product retrieval assembly according to an embodiment.
FIG. 7 shows a close-up view of a movable arm of the product retrieval assembly according to an embodiment.
FIG. 8 shows a top-down view of a product retrieval assembly according to an embodiment.
FIG. 9 shows a schematic diagram of components of a vending machine according to an embodiment.
FIG. 10 shows a diagram of a product storage area and memory of a vending machine according to an embodiment.
FIG. 11 shows an exemplary method of dispensing a product from a vending machine according to an embodiment.
FIG. 12 shows an exemplary method of dispensing a product from a vending machine according to an embodiment.
FIG. 13 shows a schematic block diagram of an exemplary computer system for carrying out operations of the vending machine according to an embodiment.

### DETAILED DESCRIPTION OF THE INVENTION

Reference will now be made in detail to representative embodiments illustrated in the accompanying drawings. It should be understood that the following descriptions are not intended to limit the embodiments to one preferred embodiment.

Various delivery mechanisms for vending machines may be used to convey products to the delivery portal of the vending machine for access by the consumer. Some vending machines may include multiple shelves or levels each having a plurality of rows of products, with each row corresponding to a different product. Each row may have its own delivery mechanism and motor for advancing the products in that row to the delivery portal of the vending machine. Such vending machines that include a motor for each row of products may require a large number of motors, which may greatly increase the cost and complexity of the vending machine. As a result, there is a need in the art for a vending machine that may dispense products with reduced complexity and at a lower cost.

Some embodiments described herein relate to a vending machine that includes a movable product retrieval assembly that includes a drive mechanism for actuating any of various advancing assemblies on which products are stored. In this way, each advancing assembly on which products are stored need not have its own motor to dispense the products. Instead, the product retrieval assembly moves to the advancing assembly having the selected product and drives the advancing assembly to dispense the product. Some embodiments described herein relate to a vending machine that includes a plurality of advancing assemblies having conveyor belts configured to rotate to advance a product into a product retrieval assembly when the product retrieval assembly actuates the advancing assembly.

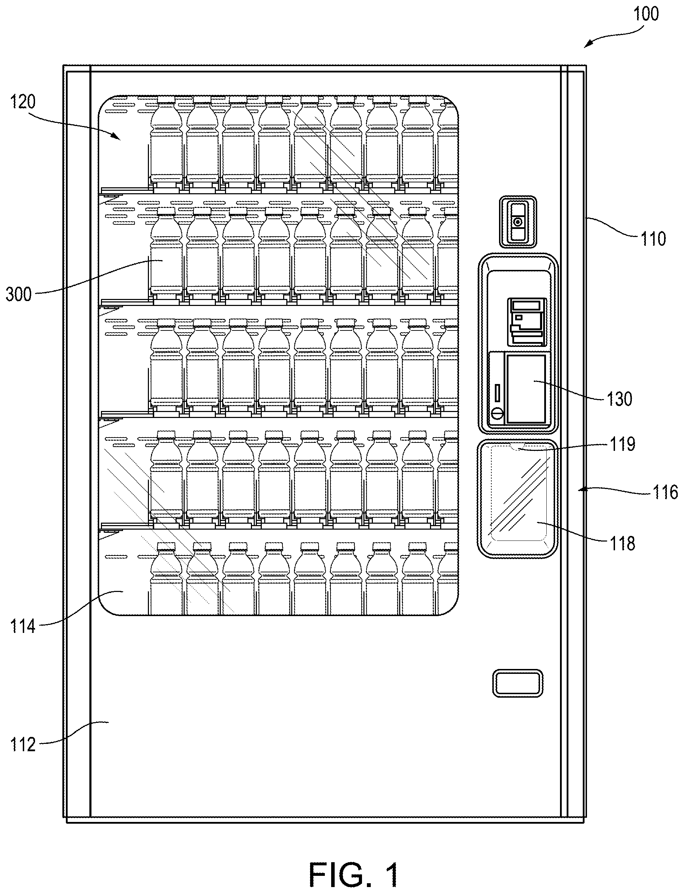

Some embodiments described herein relate to a vending machine 100 that includes a housing 110 defining a product storage area 120 in which products 300 are stored, as shown in FIG. 1. Vending machine 100 may be used to dispense any of various products and merchandise, including but not limited to, packaged beverages, such as canned or bottled beverages, and snack or food items. Product storage area 120 may be enclosed within housing 110 so that products in product storage area 120 are not directly accessible by consumers.

Housing 110 may include a lower wall, sidewalls, and an upper wall. In some embodiments, housing 110 may be shaped as a rectangular prism. However, in alternate embodiments, housing 110 may have various configurations, such as a cylindrical or semi-cylindrical configuration, housing 110 may be shaped as a cube, and may have one or more curved or rounded sidewalls. Housing 110 may further have a transparent portion 114 configured to allow a consumer to view product storage area 120 and products 300. Transparent portion 114 may be disposed on a front wall 112 of housing 110. Transparent portion 114 may be formed from glass or a transparent plastic material, including for example, polycarbonate (e.g., LEXAN), polymethylmethacrylate, or cellulose acetate butyrate, among others.

Housing 110 of vending machine 100 may define a delivery portal 116. Delivery portal 116 may provide a consumer with access to a dispensed product arranged within delivery portal 116. Delivery portal 116 may include a door 118 for removably covering the delivery portal 116. In some embodiments, door 118 may lock until a product is dispensed. When a product retrieval assembly moves a product 300 to delivery portal 116, the product retrieval assembly may engage with delivery portal 116 to open door 118 of delivery portal 116 so that product 300 may be accessed by the consumer.

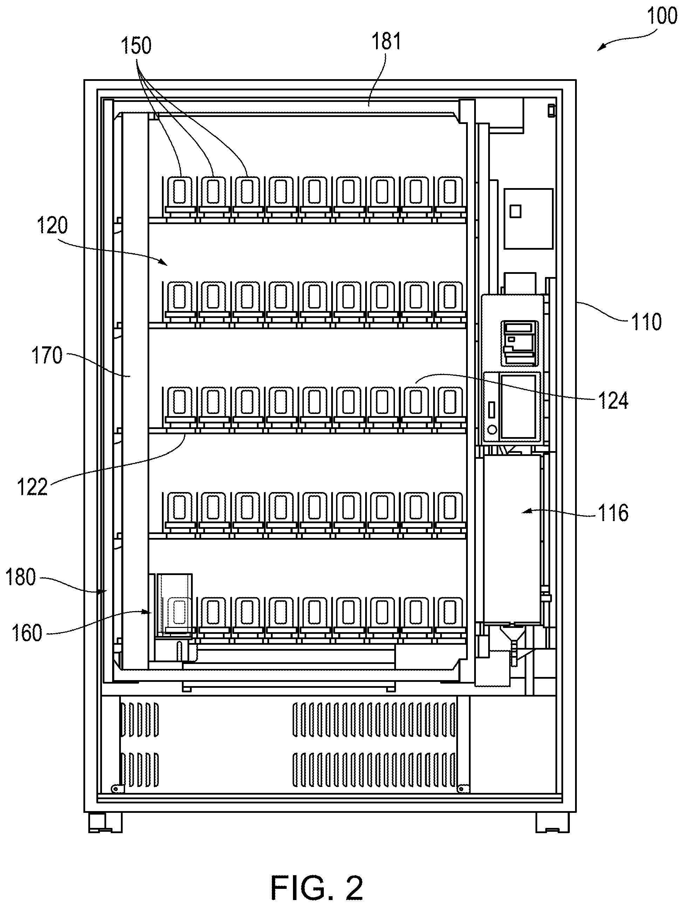

Vending machine 100 may include a plurality of advancing assemblies 150 in the product storage area 120, as shown in FIG. 2. Each advancing assembly 150 may be used to store a particular product. Advancing assemblies 150 may be arranged on one or more shelves 122 within product storage area 120. Advancing assemblies 150 may be arranged in a side-by-side manner so as to form a plurality of rows 124 on each shelf 122. Advancing assemblies 150 may be configured to move a product into a product retrieval assembly 160 when advancing assembly 150 is actuated by product retrieval assembly 160, as discussed in further detail herein. Product retrieval assembly 100 may be movable within product storage area 120 via an x-y mechanism 170 mounted to housing 110 of vending machine 100, such as by a frame 181. X-y mechanism 170 may move product retrieval assembly 160 to a location of any advancing assembly 150 or to delivery portal 116.

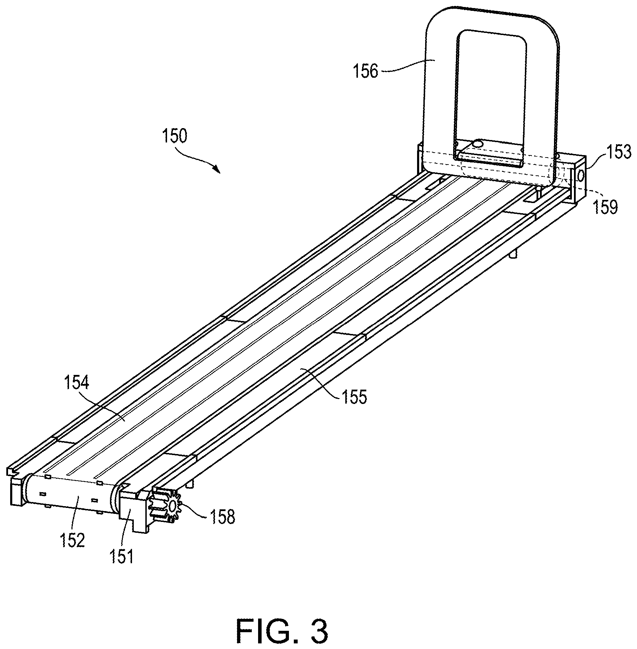

Embodiments described herein primarily refer to the advancing assemblies 150 having conveyor belts 154, as shown in FIG. 3. However, in alternate embodiments, other types of advancing assemblies may be used that are capable of advancing a product from shelf 122 onto product retrieval assembly 160 (see, e.g., FIG. 2). In some embodiments, advancing assembly 150 may include a frame 155 that supports two or more rotatable axles 152, 159. Frame 155 may support a front axle 152 at a front end 151 of frame, and a rear axle 159 at an opposing rear end 153 of frame 155. However, in some embodiments, additional axles may be present. A conveyor belt 154 on which products are positioned is arranged in a continuous loop around front and rear axles 152, 159 such that conveyor belt 154 extends from front end 151 to rear end 153 of frame 155. Conveyor belt 154 may define a planar surface between front and rear axles 152, 159 on which the products may be positioned.

In some embodiments, a pusher plate 156 may be secured to conveyor belt 154 in a fixed position so that pusher plate 156 moves from rear end 153 toward front end 151 as conveyor belt 154 rotates about axles 152, 159. Pusher plate 156 may be arranged perpendicularly to conveyor belt 154. Pusher plate 156 may help to prevent products from tipping over as conveyor belt 154 rotates.

Front axle 152 may include a coupling 158 configured to be engaged by product retrieval assembly to drive advancing assembly 150. Coupling 158 may be fixed to front axle 152 so that rotation of coupling 158 results in rotation of axle 152 and rotation of conveyor belt 154. Coupling 158 may be fixed at an end of axle 152. In some embodiments, coupling 158 may be integrally formed with front axle 152 or otherwise permanently secured to front axle 152. In some embodiments, coupling 158 may be a gear. In operation, product retrieval assembly moves to a location at or adjacent front end 151 of advancing assembly 150 and engages coupling 158 via a drive mechanism to rotate coupling 158 and front axle 152 to rotate and advance conveyor belt 154 and product toward front end 151 and into product retrieval assembly. In this way, advancing assembly 150 does not include its own drive mechanism, and instead a drive mechanism of a product retrieval assembly is used to actuate advancing assembly 150, simplifying construction of the vending machine and minimizing the cost of manufacture.

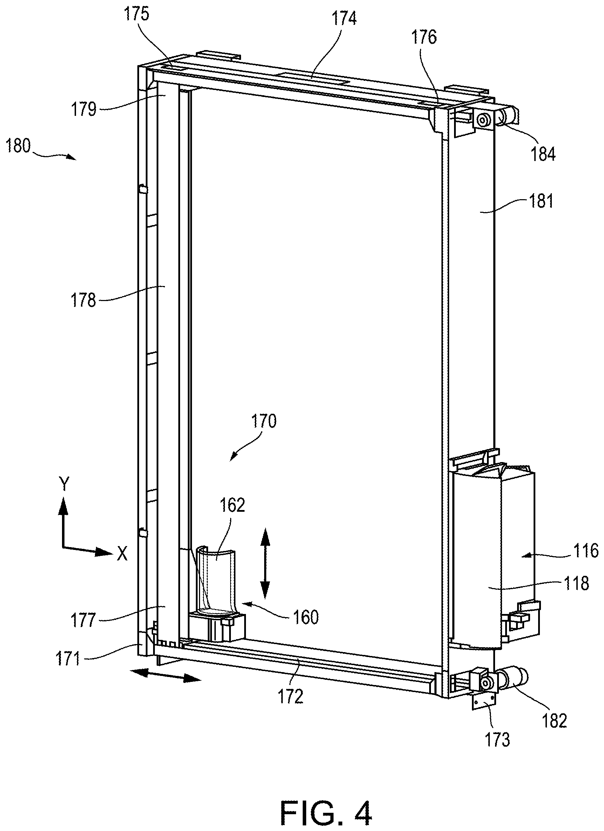

Vending machine 100 may include a delivery mechanism 180 configured to convey a selected product from the product storage area to delivery portal 116, as shown in FIG. 4. In some embodiments, delivery mechanism 180 may include a product retrieval assembly 160 that is movable via an x-y mechanism 170. Product retrieval assembly 160 may be configured to drive advancing assemblies (see, e.g., FIG. 3) and to receive a product from advancing assembly. X-y mechanism 170 may be configured to move product retrieval assembly 160 in an X-Y plane (in a vertical direction or Y-direction and in a horizontal direction or X-direction) to the location of an advancing assembly that stores the selected product, and to move product retrieval assembly 160 and the retrieved product to delivery portal 116.

In some embodiments, x-y mechanism 170 for moving product retrieval assembly 160 may include a lower horizontal guide 172, an upper horizontal guide 174, and a vertical guide 178. However, in some embodiments, only a single horizontal guide may be present. Lower horizontal guide 172 may be located at a lower end of product storage area 120, and upper horizontal guide 174 may be located at an upper end of product storage area 120. Lower and upper horizontal guides 172, 174 may be arranged out of the view of the consumer. Lower and upper horizontal guides 172, 174 may be arranged parallel to one another. Lower horizontal guide 172 may include a first end 171 opposite a second end 173. Upper horizontal guide 174 may similarly include a first end 175 opposite a second end 176. Each of the upper and lower horizontal guides 172, 174 may include a motor 182, 184. However, in some embodiments, only one of the horizontal guides may include a drive mechanism, such as a motor.

Vertical guide 178 may be movably coupled to upper and lower horizontal guides 172, 174. Vertical guide 178 may be arranged perpendicularly to upper and lower horizontal guides 172, 174. A first end 177 of vertical guide 178 may be movably coupled to lower horizontal guide 172 and an opposing second end 179 of vertical guide 178 may be movably coupled to upper horizontal guide 174. Vertical guide 178 may move reversibly between first ends 171, 175 and second ends 173, 176 of horizontal guides 172, 174.

Product retrieval mechanism 160 may be movably coupled to vertical guide 178 of x-y mechanism 170. Product retrieval mechanism 160 may reversibly move between first and second ends 177, 179 of vertical guide 178 so that product retrieval mechanism 160 may be arranged at a desired elevation. Vertical guide 178 may include a motor for moving product retrieval mechanism 160 along vertical guide 178.

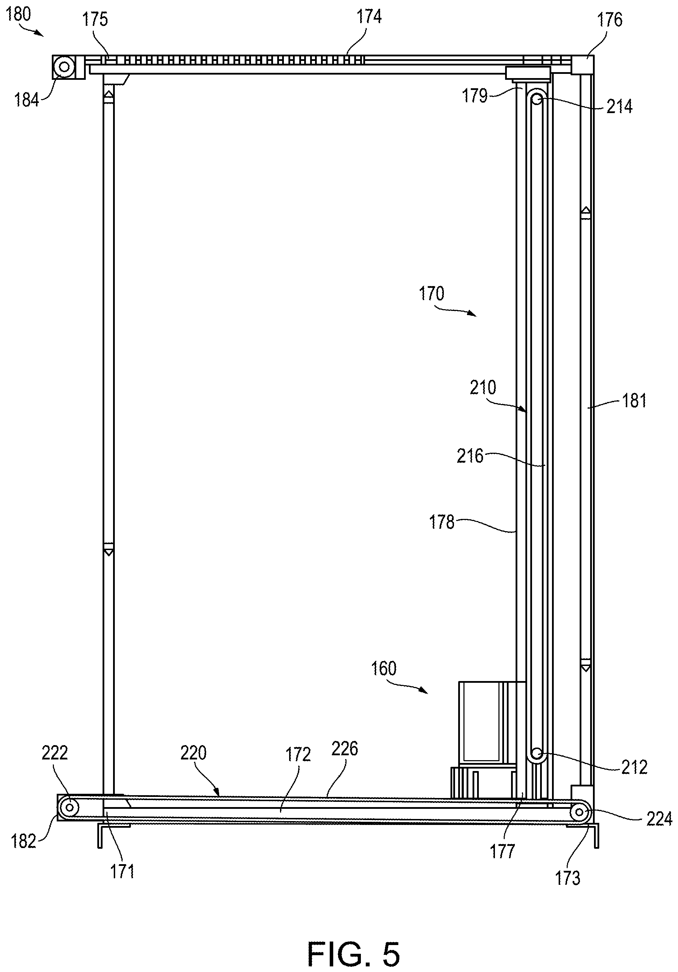

In some embodiments, x-y mechanism 170 is a belt-driven x-y mechanism 170, as shown in FIG. 5. In such embodiments, x-y mechanism 170 may include one or more belt assemblies 210 for moving vertical guide 178 in an X-direction along horizontal guides 172, 174, and for moving product retrieval mechanism 160 along vertical guide 178 in a Y-direction. In such embodiments, vertical guide 178 may include a belt assembly 210 having a first wheel 212 arranged at first end 177 of vertical guide 178, a second wheel 214 arranged at second end 179 of vertical guide 178, and a belt 216 arranged in a continuous loop around first and second wheels 212, 214. In some embodiments, belt 216 may be configured as a strap, rope, cable, or chain. At least one of first and second wheels 212, 214 may be driven by a motor to rotate belt 216 about first and second wheels 212, 214. Product retrieval mechanism 160 may be fixed to belt 216 so that product retrieval mechanism 160 translates along vertical guide 178 as belt 216 rotates. Product retrieval mechanism 160 may include one or more rollers that engage vertical guide 178 to facilitate movement of product retrieval mechanism 160 along vertical guide 178.

Similarly, each horizontal guide 172, 174 may include a belt assembly 220 having a first wheel 222 arranged at first end 171, 175 of horizontal guide 172, 174, a second wheel 224 arranged at second end 173, 176 of horizontal guide 172, 174, respectively, and a belt 226 arranged in a continuous loop around first and second wheels 222, 224. At least one of first and second wheels 222, 224 may be driven by a motor 182, 184 to rotate belt 226 about first and second wheels 222, 224. Vertical guide 178 may be fixed to belts 226 so that vertical guide 178 translates along horizontal guides 172, 174 as belts 226 rotates. Vertical guide 178 may include one or more rollers that engage horizontal guides 172, 174 to facilitate movement of vertical guide 178 along horizontal guides 172, 174.

In some embodiments, x-y mechanism 170 for moving product retrieval assembly 160 may be formed as disclosed in U.S. Patent No. 10,490,014 B2. In such embodiments, x-y mechanism 170 may include one or more lead screws and nut assemblies. Specifically, each horizontal guide 172, 174 may include a horizontal lead screw, and vertical guide 178 may include a vertical lead screw. The vertical lead screw may be movably coupled to the horizontal lead screws with a nut configuration at first and second ends 177, 179 of vertical guide 178. When horizontal lead screws are rotated, such as by a motor, vertical guide translates linearly along horizontal guides between first ends 171, 175 and second ends 173, 176 of horizontal guides.

Similarly, product retrieval mechanism 160 may be coupled to vertical lead screw of vertical guide 178 via a nut configuration such that product retrieval mechanism 160 moves along vertical lead screw as vertical lead screw is rotated via a motor. Product retrieval mechanism 160 may move reversibly along vertical guide 178 between first and second ends 178, 179.

In some embodiments, other types of x-y mechanisms 170 may be used instead of a system of lead screws and nut assemblies to move product retrieval assembly 160.

X-y mechanism 170 may be supported by a frame 181 (see, e.g., FIG. 4). Frame 181 may have a rectangular configuration. Frame 181 may secure x-y mechanism 170 to housing 110 of vending machine 100 (see, e.g., FIG. 2). Further, delivery portal 116 may be secured to frame 181. X-y mechanism 170 may place product retrieval assembly 160 in communication with delivery portal 116 so that product retrieval assembly 160 may convey a product into delivery portal 116 for access by a consumer. In some embodiments, product retrieval assembly 160 may at least partially enter delivery portal 116, such as via an anti-theft gate. Further, product retrieval assembly 160 may cause a door 118 of delivery portal 116 to open when product retrieval assembly 160 engages with delivery portal 116 so that the product may be accessed by the consumer.

In some embodiments, a hand presence sensor 119 may detect the presence of a consumer's hand in or near delivery portal 116, as shown in FIG. 1. Hand presence sensor 119 may determine when the product has been removed from delivery portal 116. In some embodiments, hand-presence sensor 119 may be, for example, an infrared sensor, among other sensors. A product sensor 168 of product retrieval assembly 160, as discussed below, may alternatively or additional be used to detect when product is removed from product retrieval assembly 160. Once the product has been removed from delivery portal 116, as determined by product sensor 168 and/or hand presence sensor 119, product retrieval mechanism 160 may be moved away from delivery portal 116 so that door 118 of delivery portal 116 is closed, and anti-theft gate is closed. Product retrieval mechanism 160 may retrieve further products selected by the consumer or may return to an idle position until a new transaction is initiated by a consumer.

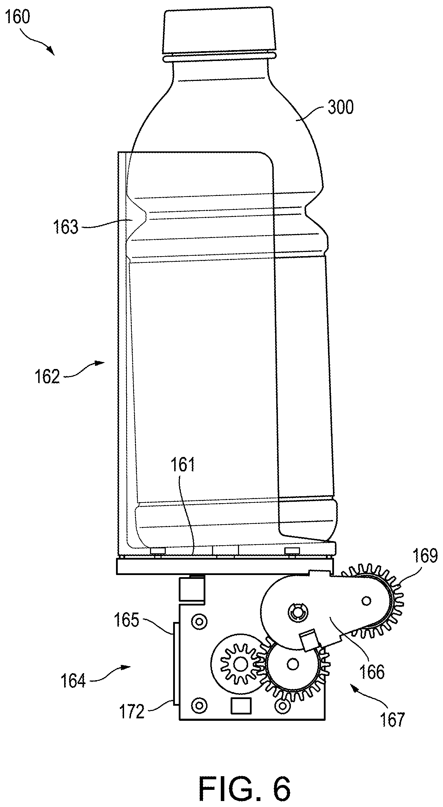

In some embodiments, a product retrieval assembly 160 may actuate an advancing assembly 150 and receive a product from advancing assembly 150. Product retrieval assembly 160 may include a cup 162 configured to receive a product from product storage area 120, and a drive mechanism 164 configured to actuate an advancing assembly 150 in product storage area 120 to move a product 300 into cup 162, as shown in FIG. 6.

In some embodiments, cup 162 may include a base 161 and a sidewall 163 extending upwardly from base 161. Sidewall 163 may extending around a portion of a perimeter of base 161. In some embodiments, sidewall 163 may have a curvature, and may have a C-shape. However, cup 162 may have various configurations suitable for receiving and supporting a product 300. In operation, a product 300 arranged in an upstanding orientation may be received on base 161 in a standing orientation with the product 300 supported by sidewall 163 to prevent product 300 from falling off of product retrieval assembly 160. In some embodiments, sidewall 163 may be formed of a transparent material so that product 300 is visible while in cup 162 allowing a consumer to watch product 300 as it is moved from product storage area 120 to delivery portal 116.

Drive mechanism 164 may be secured to base 161 of cup 162 such that drive mechanism 164 is arranged beneath cup 162. In some embodiments, drive mechanism 164 may include a motor 165 that drives a gear train 167. Gear train 167 may include a gear 169 that is configured to engage the coupling of an advancing assembly in the product storage area of the vending machine.

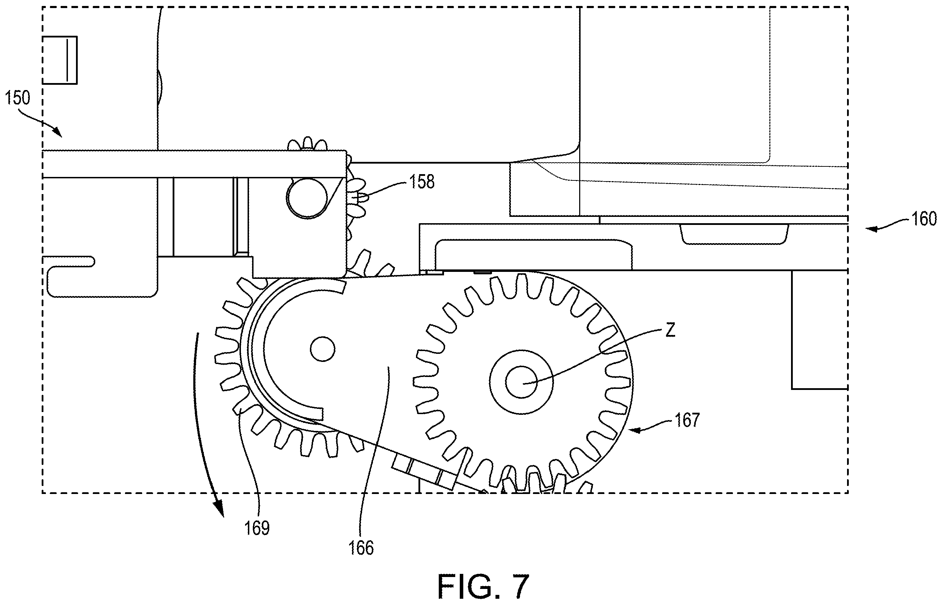

Drive mechanism 164 is configured to actuate advancing assembly 150, and particularly a coupling 158 of advancing assembly 150, as shown in FIG. 7. Drive mechanism 164 includes a motor 165 that drives a gear train 167 configured to engage coupling 158. Thus, when a gear 169 of gear train 167 engages coupling 158, gear 169 rotates coupling 158 and front axle 152 to drive conveyor belt 154.

Drive mechanism 164 includes a movable arm 166 that moves from a stowed position to an extended position to engage coupling 158, as best shown in FIG. 7. Movable arm 166 rotates about an axis Z, and in some embodiments may rotate up to 180 degrees. Gear train 167 extends onto movable arm 166 so that gear 169 configured to engage coupling 158 of advancing assembly 150 is arranged on movable arm 166. Movable arm 166 may remain in stowed position until product retrieval mechanism 160 is moved to a location of an advancing assembly 150. When product retrieval assembly 160 is at a location of an advancing assembly 160, movable arm 166 may move to extended position so that gear 169 may engage coupling 158 of advancing assembly 150. In some embodiments, gear train 167 and movable arm 166 may be arranged on a side of base 161. In this way, gear train 167 may be out of the path of a product into cup 162.

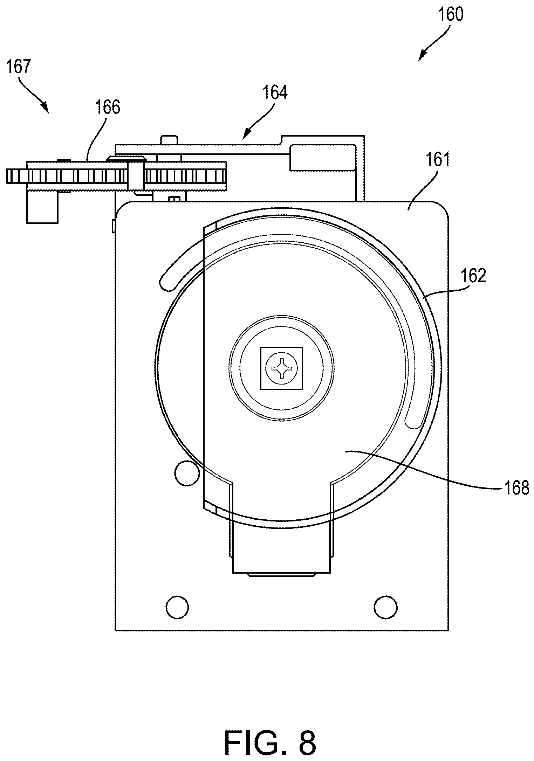

In some embodiments, product retrieval assembly 160 may include a product sensor 168 configured to detect a product within cup 162, as shown in FIG. 8. Sensor 168 may be a capacitive sensor. However, in some embodiments, sensor 168 may be other types of sensors, such as a weight sensor, a force sensor, or a photosensor, among others. Sensor 168 may be arranged on base 161 of cup 162.

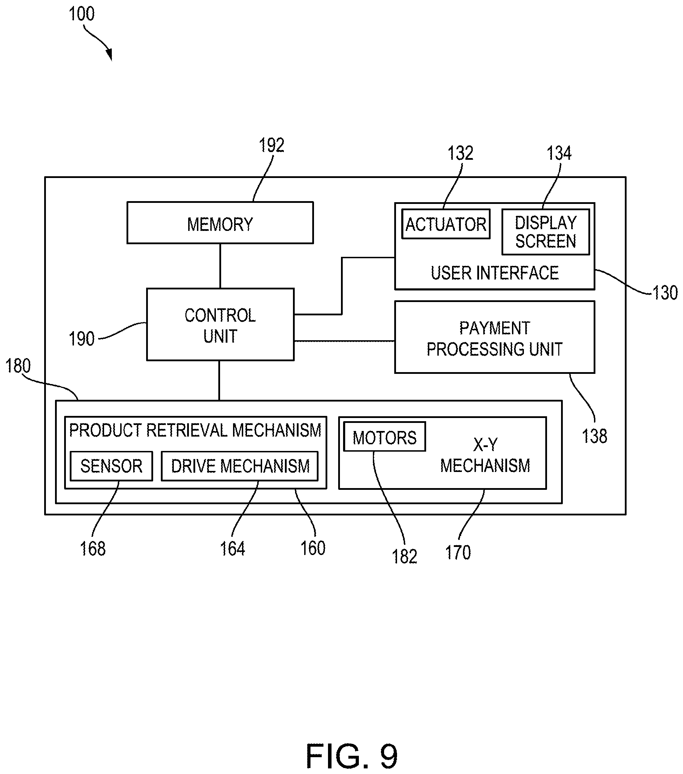

Sensor 168 may be in communication with a control unit 190 that controls operation of vending machine 100, as shown in FIG. 9. Control unit 190 may be in communication with a memory 192 that stores instructions for executing the vending operation. Control unit 190 may control delivery mechanism 180 and may cause x-y mechanism 170 to move product retrieval assembly 160 to the location of an advancing assembly on which a desired product is stored. Control unit 190 may control motors 182 of x-y mechanism 170 that cause movement of product retrieval assembly 160. Control unit 190 may then activate drive mechanism 164 of product retrieval assembly 160 to actuate an advancing assembly causing to move a product into product retrieval assembly 160. Once the product is received in product retrieval assembly 160 as determined by sensor 168, control unit 190 may deactivate drive mechanism 164 to stop actuation of the advancing assembly. Once drive mechanism 164 is deactivated, control unit 190 may cause x-y mechanism 170 to move product retrieval assembly 160 to the delivery portal.

In some embodiments, control unit 190 may also be in communication with a user interface 130 for receiving user input, such as a beverage selection, and also a payment processing unit 138 for authorizing a consumer to make a purchase or for receiving a payment source from the consumer prior to receiving user input or prior to dispensing a product. In some embodiments, payment processing unit 138 may include a slot configured to receive paper bills, coins or tokens, a card reader to read a magnetic stripe or electronic chip of a payment card, such as a credit card, debit card, gift card, or the like. Payment processing unit 138 may include contactless payment options, such as a near field communication (NFC) antenna configured to detect a contactless payment card, a transceiver capable of communicating with a portable electronic device, such as a smartphone, smartwatch, tablet or the like, for receiving electronic payment (e.g., Paypal or cryptocurrency); a scanner configured to scan a code on a portable electronic device to receive mobile payment from a consumer (e.g., Apple Pay or Google Pay). Payment processing unit 138 may include a sensor configured to identify a consumer and access a consumer account having a payment source based on the detected consumer identity. Vending machine 100 may identify the consumer via facial recognition, voice recognition, or other biometric recognition, or by communicating with the consumer's portable electronic device, or by scanning a code displayed on the portable electronic device or receiving a signal or communication from the portable electronic device. In this way, the consumer need not provide a payment source at the time of purchase, and the consumer's account may be charged for the dispensed product. The consumer's account may be associated to a payment source or method, or the account may have a preloaded balance.

User interface 130 may receive user input via one or more actuators 132, such as buttons, keys, levers, dials, or switches, among others. User interface 130 may alternatively or additionally include a display screen 134 for displaying information and instructions. Display screen 134 may be an electroluminescent display (ELD), a liquid crystal display (LCD), a light emitting diode (LED) display, an organic LED (OLED) display, a quantum dot display (QLED), a plasma display (PDP), or an electronic paper (e-ink) display, among others. In some embodiments, display screen 134 may be a touch screen display configured to receive the user input. Display screen 134 may display instructions and information, and may display a graphical user interface (GUI). In some embodiments, user input may include entry of a product number or code on a keypad or touchscreen, user input may include pressing a push-button that corresponds to a particular product, or user input may include touching a touch screen at a location at which a desired product name or image is displayed.

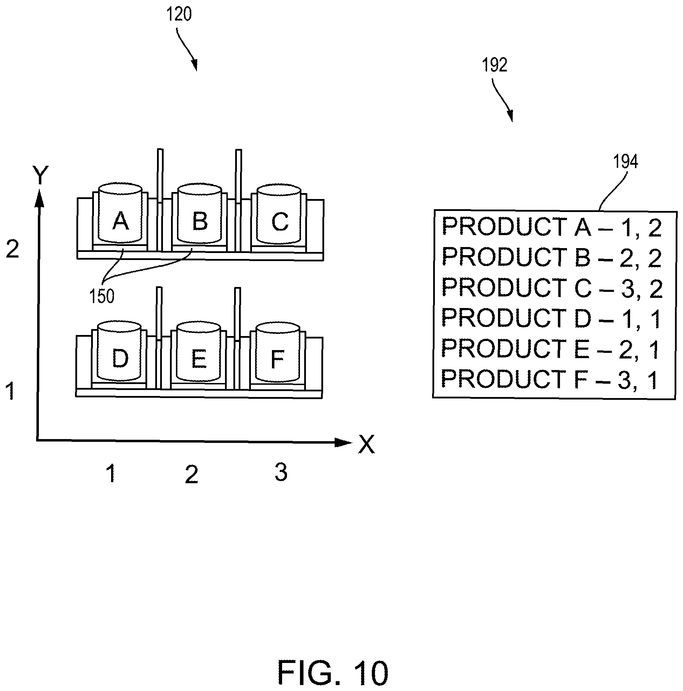

User input is received by control unit 190 from user interface 130, and control unit 190 may determine a location of product within the product storage area of vending machine 100. Control unit 190 may retrieve product location information from a memory 192, as shown in FIG. 10. Each advancing assembly 150 in product storage area 120 may have a coordinate, such as a shelf number (e.g., shelf 1, 2, 3) representing a Y-value, and a row number (e.g., row 1, 2, 3, etc.) representing an X-value. The identity of the product at each coordinate may be saved in memory 192, such as in a database 194. Thus, control unit 190 may receive the user input via user interface 130 and may determine the coordinate for that selected product stored in a memory 192, and actuate the x-y mechanism to move the product retrieval assembly to the coordinate for the selected product. For example, if user selects Product A, control unit may retrieve the location of Product A from memory 192, which is row 1, shelf 2, and may actuate the x-y mechanism 170 to move the product retrieval assembly 160 to row 1, shelf 2.

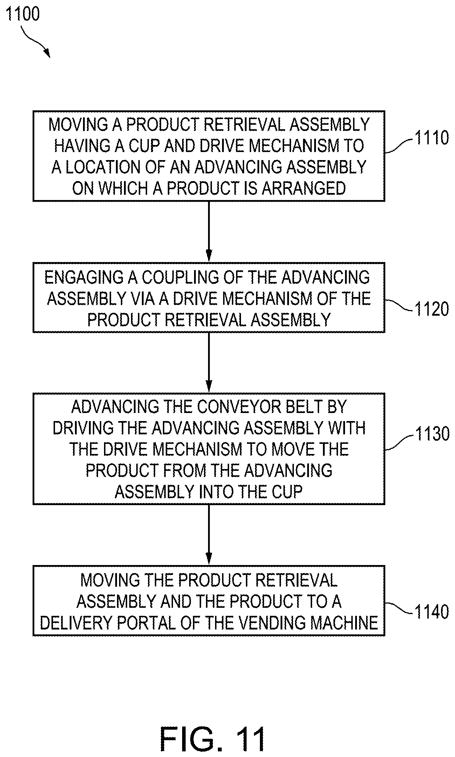

An exemplary method of dispensing a product from a vending machine 1100 is shown in FIG. 11. The vending machine may move a product retrieval assembly having a cup and a drive mechanism to a location of an advancing assembly on which a selected product is arranged 1110. The product retrieval assembly may be movable within product storage area via an x-y mechanism. The product retrieval assembly may engage a coupling of the advancing assembly via the drive mechanism of the product retrieval assembly 1120. A conveyor belt of the advancing assembly may be driven by the drive mechanism to move the product from the advancing assembly into a cup of the product retrieval assembly 1130. In some embodiments, a sensor may determine when the product is received within the cup, and actuation of the drive mechanism may cease when the product is detected in the cup by the sensor. Once the product is received in the cup, the product retrieval assembly disengages the coupling of the advancing assembly. The product retrieval assembly and the product may then be moved to a delivery portal of the vending machine 1140. The product retrieval assembly may be moved to the delivery portal by the x-y mechanism of the vending machine. Once the product is moved to the delivery portal, the product retrieval assembly may return to an idle position, or may move to the location of an advancing assembly for retrieving an dispensing further products selected by the consumer.

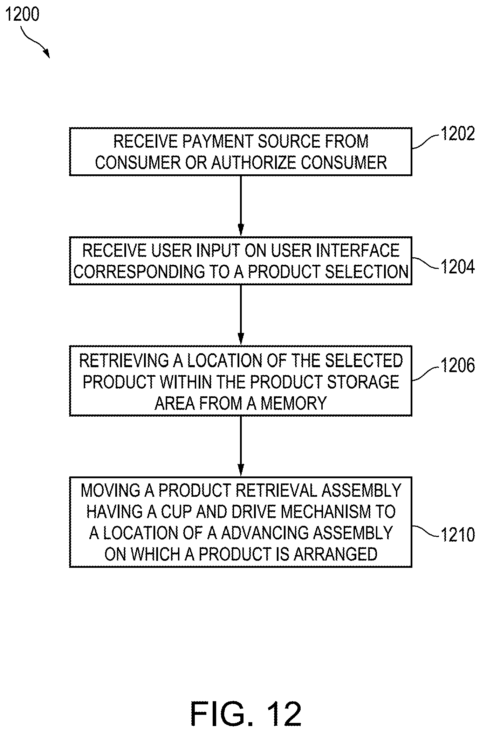

In some embodiments, the method of dispensing a product 1200 may include additional steps as shown in FIG. 12. Vending machine may receive payment source from a consumer or authorize consumer to perform a transaction 1202. Once the consumer is authorized or payment is received, the vending machine may receive a user input on a user interface that corresponds to a product selection of the consumer 1204. The control unit may retrieve a location of the selected product within the product storage area from a memory 1206. The memory may store a database that includes location information for each product within product storage area. Vending machine may then be operated to retrieve the product from the location as described in method 1100, and upon receiving the location information, the product retrieval assembly may be moved to the location of the advancing assembly on which the product is arranged 1210.

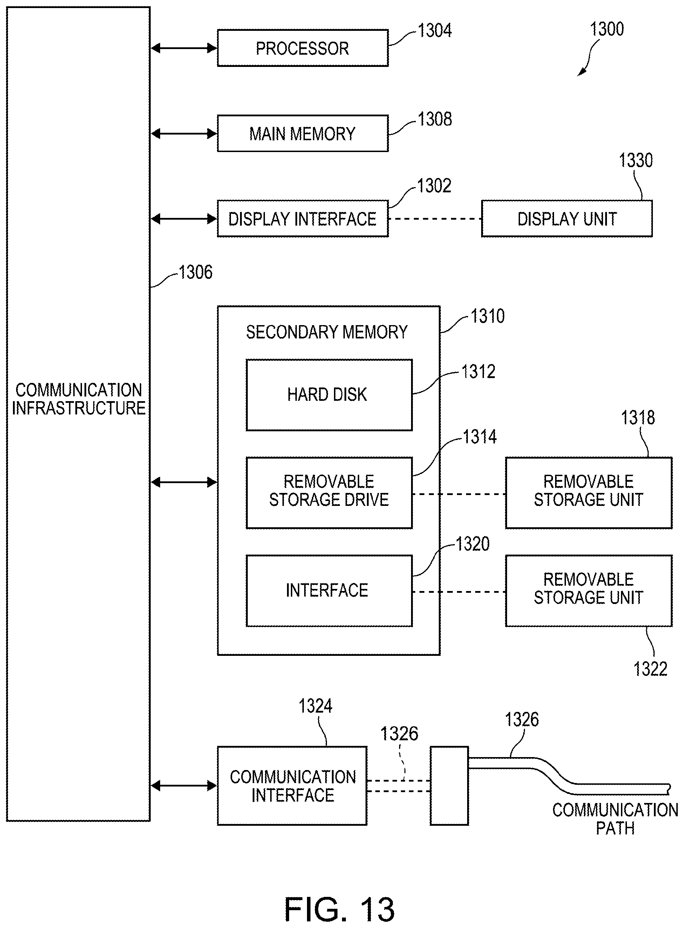

FIG. 13 illustrates an exemplary computer system 1300 in which embodiments, or portions thereof, may be implemented as computer-readable code. Control unit 190 as discussed herein may be computer systems having all or some of the components of computer system 1300 for implementing processes discussed herein.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, and mainframe computers, computer linked or clustered with distributed functions, as well as pervasive or miniature computers that may be embedded into virtually any device.

For instance, at least one processor device and a memory may be used to implement the above described embodiments. A processor device may be a single processor, a plurality of processors, or combinations thereof. Processor devices may have one or more processor "cores."

Various embodiments of the invention(s) may be implemented in terms of this example computer system 1300. After reading this description, it will become apparent to a person skilled in the relevant art how to implement one or more of the invention(s) using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged.

Processor device 1304 may be a special purpose or a general purpose processor device. As will be appreciated by persons skilled in the relevant art, processor device 1304 may also be a single processor in a multi-core/multiprocessor system, such system operating alone, or in a cluster of computing devices operating in a cluster or server farm. Processor device 1304 is connected to a communication infrastructure 1306, for example, a bus, message queue, network, or multi-core message-passing scheme.

Computer system 1300 also includes a main memory 1308, for example, random access memory (RAM), and may also include a secondary memory 1310. Secondary memory 1310 may include, for example, a hard disk drive 1312, or removable storage drive 1314. Removable storage drive 1314 may include a floppy disk drive, a magnetic tape drive, an optical disk drive, a flash memory, or the like. The removable storage drive 1314 reads from and/or writes to a removable storage unit 1318 in a well-known manner. Removable storage unit 1318 may include a floppy disk, magnetic tape, optical disk, a universal serial bus (USB) drive, etc. which is read by and written to by removable storage drive 1314. As will be appreciated by persons skilled in the relevant art, removable storage unit 1318 includes a computer usable storage medium having stored therein computer software and/or data.

Computer system 1300 (optionally) includes a display interface 1302 (which can include input and output devices such as keyboards, mice, etc.) that forwards graphics, text, and other data from communication infrastructure 1306 (or from a frame buffer not shown) for display on display unit 1330.

In alternative implementations, secondary memory 1310 may include other similar means for allowing computer programs or other instructions to be loaded into computer system 1300. Such means may include, for example, a removable storage unit 1322 and an interface 1320. Examples of such means may include a program cartridge and cartridge interface (such as that found in video game devices), a removable memory chip (such as an EPROM, or PROM) and associated socket, and other removable storage units 1322 and interfaces 1320 which allow software and data to be transferred from the removable storage unit 1322 to computer system 1300.

Computer system 1300 may also include a communication interface 1324. Communication interface 1324 allows software and data to be transferred between computer system 1300 and external devices. Communication interface 1324 may include a modem, a network interface (such as an Ethernet card), a communication port, a PCMCIA slot and card, or the like. Software and data transferred via communication interface 1324 may be in the form of signals, which may be electronic, electromagnetic, optical, or other signals capable of being received by communication interface 1324. These signals may be provided to communication interface 1324 via a communication path 1326. Communication path 1326 carries signals and may be implemented using wire or cable, fiber optics, a phone line, a cellular phone link, an RF link or other communication channels.

In this document, the terms "computer program medium" and "computer usable medium" are used to generally refer to media such as removable storage unit 1318, removable storage unit 1322, and a hard disk installed in hard disk drive 1312. Computer program medium and computer usable medium may also refer to memories, such as main memory 1308 and secondary memory 1310, which may be memory semiconductors (e.g. DRAMs, etc.).

Computer programs (also called computer control logic) are stored in main memory 1308 and/or secondary memory 1310. Computer programs may also be received via communication interface 1324. Such computer programs, when executed, enable computer system 1300 to implement the embodiments as discussed herein. In particular, the computer programs, when executed, enable processor device 1304 to implement the processes of the embodiments discussed here. Accordingly, such computer programs represent controllers of the computer system 1300. Where the embodiments are implemented using software, the software may be stored in a computer program product and loaded into computer system 1300 using removable storage drive 1314, interface 1320, and hard disk drive 1312, or communication interface 1324.

Embodiments of the invention(s) also may be directed to computer program products comprising software stored on any computer useable medium. Such software, when executed in one or more data processing device, causes a data processing device(s) to operate as described herein. Embodiments of the invention(s) may employ any computer useable or readable medium. Examples of computer useable mediums include, but are not limited to, primary storage devices (e.g., any type of random access memory), secondary storage devices (e.g., hard drives, floppy disks, CD ROMS, ZIP disks, tapes, magnetic storage devices, and optical storage devices, MEMS, nanotechnological storage device, etc.).

It is to be appreciated that the Detailed Description section, and not the Summary and Abstract sections, is intended to be used to interpret the claims. The Summary and Abstract sections may set forth one or more but not all exemplary embodiments of the present invention(s) as contemplated by the inventors, and thus, are not intended to limit the present invention(s) and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention(s) that others can, by applying knowledge within the skill of the art, readily modify and/or adapt for various applications such specific embodiments, without undue experimentation, and without departing from the general concept of the present invention(s). Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance herein.

The breadth and scope of the present invention(s) should not be limited by any of the above-described exemplary embodiments, but should be defined only in accordance with the following claims.

## Claims

1. A delivery mechanism (180) for a vending machine (100), comprising: an x-y mechanism (170); and
a product retrieval assembly (160) movable by the x-y mechanism (170) in an x-direction and in a y-direction that is perpendicular to the x-direction, wherein the product retrieval assembly (160) comprises:
a cup (162) for receiving a product;
a drive mechanism (164) comprising a motor (165) and a gear train (167) configured to drive an advancing assembly (150) on which the product is positioned to advance the product into the cup (162), wherein the drive mechanism (164) further comprises a movable arm (166) configured to move from a stowed position to an extended position to engage a gear (169) of the gear train (167) arranged on the movable arm (166) with a coupling of the advancing assembly (150), wherein the movable arm (166) is rotatable about an axis from the stowed position to the extended position.

2. A vending machine (100), comprising:
a housing (110) defining a product storage area (120) and a delivery portal (116);
an advancing assembly (150) within the product storage area (120) configured to advance a product, wherein the advancing assembly (150) comprises:
an axle (152) having a coupling;
a conveyor belt (154) rotatable about the axle (152);
a pusher secured to the conveyor belt (154) and configured to push the product as the conveyor belt (154) rotates;
a delivery mechanism (180) according to claim 1 that is configured to convey the product from the product storage area (120) to the delivery portal (116).

3. The vending machine (100) of claim 2, wherein the x-y mechanism (170) comprises a horizontal guide, a vertical guide arranged perpendicularly to the horizontal guide and movable along the horizontal guide, and wherein the product retrieval assembly (160) is movable along the vertical guide.

4. The vending machine (100) of claim 2, wherein the axle (152) and the coupling are arranged at a front end of the advancing assembly (150).

5. The vending machine (100) of claim 2, wherein the cup (162) includes a base and a sidewall extending upwardly from the base, and the gear train (167) and movable arm (166) are arranged on a side of the base.

6. The vending machine (100) of claim 2, further comprising:
a user interface for receiving a user input corresponding to a selection of a product, and
a control unit in communication with the user interface and the delivery mechanism (180), such that the control unit operates the delivery mechanism (180) to retrieve the product based on the user input.

7. The vending machine (100) of claim 2, wherein the cup (162) of the product retrieval assembly (160) comprises a sensor configured to detect when the product is located within the cup (162), and optionally wherein the sensor comprises a capacitive sensor.

8. The delivery mechanism (180) of claim 1, wherein the x-y mechanism (170) comprises a horizontal guide, a vertical guide arranged perpendicularly to the horizontal guide and movable along the horizontal guide, and wherein the product retrieval assembly (160) is movable along the vertical guide.

9. The delivery mechanism (180) of claim 1, wherein the drive mechanism (164) is arranged beneath the cup (162).

10. A method for dispensing a product in a vending machine (100), comprising:
moving a product retrieval assembly (160) comprising a cup (162) and a drive mechanism (164) to a location of an advancing assembly on which the product is arranged;
engaging a coupling of the advancing assembly (150) via the drive mechanism (164) of the product retrieval assembly (160), wherein engaging the coupling comprises moving a movable arm (166) of the product retrieval assembly (160) from a stowed position to an extended position in which a gear (169) of the drive mechanism (164) arranged on the movable arm (166) engages the coupling of the advancing assembly (150) by rotating the movable arm (166) about an axis;
advancing the advancing assembly (150) by driving the advancing assembly (150) with the drive mechanism (164) of the product retrieval assembly (160) to move the product from the advancing assembly (150) into the cup (162) of the product retrieval assembly (160); and
moving the product retrieval assembly (160) and the product to a delivery portal (116) of the vending machine (100).

11. The method of claim 10, wherein moving the product retrieval assembly (160) to the location of the product comprises:
moving a vertical lead screw along a horizontal screw;
moving the product retrieval assembly (160) along the vertical screw to the location of the product.

12. The method of claim 10, further comprising receiving a user input via a user interface, wherein the user input corresponds to a selection of a product, and retrieving a location of the selected product from a memory that stores product location information, and moving the product retrieval assembly (160) to the location.

## Patentansprüche

1. Ausgabemechanismus (180) für einen Verkaufsautomaten (100), umfassend:
einen x-y-Mechanismus (170);
eine Produktentnahmeanordnung (160), die durch den x-y-Mechanismus (170) in einer x-Richtung und in einer y-Richtung, die senkrecht zu der x-Richtung verläuft, bewegbar ist, wobei die Produktentnahmeanordnung (160) umfasst:
einen Becher (162) zum Aufnehmen eines Produkts;
einen Antriebsmechanismus (164), umfassend einen Motor (165) und ein Zahnradgetriebe (167), die dazu eingerichtet sind, eine Vorschubanordnung (150) anzutreiben, auf der das Produkt positioniert ist, um das Produkt in den Becher (162) voranzuschieben, wobei der Antriebsmechanismus (164) des Weiteren einen beweglichen Arm (166) umfasst, der dazu eingerichtet ist, sich von einer eingefahrenen Position in eine ausgefahrene Position zu bewegen, um ein Zahnrad (169) des Zahnradgetriebes (167), das an dem beweglichen Arm (166) angeordnet ist, mit einer Kupplung der Vorschubanordnung (150) in Eingriff zu bringen, wobei der bewegliche Arm (166) um eine Achse von der eingefahrenen Position in die ausgefahrene Position drehbar ist.

2. Verkaufsautomat (100), umfassend:
ein Gehäuse (110), das einen Produktlagerbereich (120) und ein Ausgabeportal (116) definiert;
eine Vorschubanordnung (150) innerhalb des Produktlagerbereichs (120), die dazu eingerichtet ist, ein Produkt voranzuschieben, wobei die Vorschubanordnung (150) umfasst:
eine Achse (152), die eine Kupplung aufweist;
ein Förderband (154), das um die Achse (152) drehbar ist;
einen Schieber, der an dem Förderband (154) befestigt und dazu eingerichtet ist, das Produkt zu schieben, wenn sich das Förderband (154) dreht;
einen Ausgabemechanismus (180) nach Anspruch 1, der dazu eingerichtet ist, das Produkt aus dem Produktlagerbereich (120) zu dem Ausgabeportal (116) zu befördern.

3. Verkaufsautomat (100) nach Anspruch 2, wobei der x-y-Mechanismus (170) eine horizontale Führung und eine vertikale Führung, die senkrecht zu der horizontalen Führung angeordnet und entlang der horizontalen Führung bewegbar ist, umfasst, und wobei die Produktentnahmeanordnung (160) entlang der vertikalen Führung bewegbar ist.

4. Verkaufsautomat (100) nach Anspruch 2, wobei die Achse (152) und die Kupplung an einem vorderen Ende der Vorschubeinheit (150) angeordnet sind.

5. Verkaufsautomat (100) nach Anspruch 2, wobei der Becher (162) eine Basis und eine Seitenwand, die sich von der Basis nach oben erstreckt, aufweist und das Zahnradgetriebe (167) und der bewegliche Arm (166) an einer Seite der Basis angeordnet sind.

6. Verkaufsautomat (100) nach Anspruch 2, des Weiteren umfassend:
eine Benutzerschnittstelle zum Empfangen einer Benutzereingabe, die der Auswahl eines Produkts entspricht, und
eine Steuereinheit in Kommunikation mit der Benutzerschnittstelle und dem Ausgabemechanismus (180), dergestalt, dass die Steuereinheit den Ausgabemechanismus (180) auf der Grundlage der Benutzereingabe betätigt, um das Produkt zu entnehmen.

7. Verkaufsautomat (100) nach Anspruch 2, wobei der Becher (162) der Produktentnahmeanordnung (160) einen Sensor umfasst, der dazu eingerichtet ist zu detektieren, wenn sich das Produkt innerhalb des Bechers (162) befindet, und wobei optional der Sensor einen kapazitiven Sensor umfasst.

8. Ausgabemechanismus (180) nach Anspruch 1, wobei der x-y-Mechanismus (170) eine horizontale Führung und eine vertikale Führung, die senkrecht zu der horizontalen Führung angeordnet und entlang der horizontalen Führung bewegbar ist, umfasst, und wobei die Produktentnahmeanordnung (160) entlang der vertikalen Führung bewegbar ist.

9. Ausgabemechanismus (180) nach Anspruch 1, wobei der Antriebsmechanismus (164) unterhalb des Bechers (162) angeordnet ist.

10. Verfahren zum Ausgeben eines Produkts in einem Verkaufsautomaten (100), umfassend:
Bewegen einer Produktentnahmeanordnung (160), die einen Becher (162) und einen Antriebsmechanismus (164) umfasst, zu einer Stelle einer Vorschubanordnung, auf der das Produkt angeordnet ist;
Ineingriffnehmen einer Kupplung der Vorschubanordnung (150) über den Antriebsmechanismus (164) der Produktentnahmeanordnung (160), wobei das Ineingriffnehmen der Kupplung das Bewegen eines beweglichen Arms (166) der Produktentnahmeanordnung (160) aus einer eingefahrenen Position in eine ausgefahrene Position umfasst, in der ein Zahnrad (169) des Antriebsmechanismus (164), das an dem beweglichen Arm (166) angeordnet ist, die Kupplung der Vorschubanordnung (150) durch Drehen des beweglichen Arms (166) um eine Achse in Eingriff nimmt;
Voranschieben der Vorschubanordnung (150) durch Antreiben der Vorschubanordnung (150) mit dem Antriebsmechanismus (164) der Produktentnahmeanordnung (160), um das Produkt von der Vorschubanordnung (150) in den Behälter (162) der Produktentnahmeanordnung (160) hineinzubewegen;
Bewegen der Produktentnahmeanordnung (160) und des Produkts zu einem Ausgabeportal (116) des Verkaufsautomaten (100).

11. Verfahren nach Anspruch 10, wobei das Bewegen der Produktentnahmeanordnung (160) zum Lagerort des Produkts umfasst:
Bewegen einer vertikalen Leitspindel entlang einer horizontalen Spindel;
Bewegen der Produktentnahmeanordnung (160) entlang der vertikalen Leitspindel zum Lagerort des Produkts.

12. Verfahren nach Anspruch 10, des Weiteren umfassend das Empfangen einer Benutzereingabe über eine Benutzerschnittstelle, wobei die Benutzereingabe einer Auswahl eines Produkts entspricht, und das Abrufen eines Lagerortes des ausgewählten Produkts aus einem Speicher, der Produktlagerort-Informationen speichert, und das Bewegen der Produktentnahmeanordnung (160) zu dem Lagerort.

## Revendications

1. Mécanisme de distribution (180) pour un distributeur automatique (100), comprenant :
un mécanisme x-y (170) ; et
un ensemble de récupération de produit (160) pouvant être déplacé par le mécanisme x-y (170) dans une direction x et dans une direction y qui est perpendiculaire à la direction x, dans lequel l'ensemble de récupération de produit (160) comprend :
un godet (162) destiné à recevoir un produit ;
un mécanisme d'entraînement (164) comprenant un moteur (165) et un train d'engrenages (167), configurés pour entraîner un ensemble d'avancement (150) sur lequel le produit est positionné pour faire avancer le produit dans le godet (162), dans lequel le mécanisme d'entraînement (164) comprend en outre un bras mobile (166) configuré pour se déplacer d'une position repliée à une position déployée afin de mettre en prise un engrenage (169) du train d'engrenages (167) disposé sur le bras mobile (166) avec un accouplement de l'ensemble d'avancement (150), dans lequel le bras mobile (166) peut tourner autour d'un axe de la position repliée à la position déployée.

2. Distributeur automatique (100), comprenant :
un caisson (110) définissant une zone de stockage de produits (120) et un portique de distribution (116) ;
un ensemble d'avancement (150) à l'intérieur de la zone de stockage de produits (120), configuré pour faire avancer un produit, dans lequel l'ensemble d'avancement (150) comprend :
un axe (152) comportant un accouplement ;
une bande transporteuse (154) pouvant tourner autour de l'axe (152) ;
un poussoir fixé à la bande transporteuse (154) et configuré pour pousser le produit pendant que la bande transporteuse (154) tourne ;
un mécanisme de distribution (180) selon la revendication 1 qui est configuré pour transporter le produit de la zone de stockage de produits (120) au portique de distribution (116).

3. Distributeur automatique (100) selon la revendication 2, dans lequel le mécanisme x-y (170) comprend un guide horizontal, un guide vertical disposé perpendiculairement au guide horizontal et mobile le long du guide horizontal, et dans lequel l'ensemble de récupération de produit (160) est mobile le long du guide vertical.

4. Distributeur automatique (100) selon la revendication 2, dans lequel l'axe (152) et l'accouplement sont disposés à une extrémité avant de l'ensemble d'avancement (150).

5. Distributeur automatique (100) selon la revendication 2, dans lequel le godet (162) inclut une base et une paroi latérale s'étendant vers le haut à partir de la base, et le train d'engrenages (167) et le bras mobile (166) sont disposés sur un côté de la base.

6. Distributeur automatique (100) selon la revendication 2, comprenant en outre :
une interface utilisateur destinée à recevoir une entrée utilisateur correspondant à une sélection d'un produit, et
une unité de commande en communication avec l'interface utilisateur et le mécanisme de distribution (180), de telle sorte que l'unité de commande actionne le mécanisme de distribution (180) sur la base de l'entrée utilisateur pour récupérer le produit.

7. Distributeur automatique (100) selon la revendication 2, dans lequel le godet (162) de l'ensemble de récupération de produit (160) comprend un capteur configuré pour détecter lorsque le produit est situé dans le godet (162), et éventuellement dans lequel le capteur comprend un capteur capacitif.

8. Mécanisme de distribution (180) selon la revendication 1, dans lequel le mécanisme x-y (170) comprend un guide horizontal, un guide vertical disposé perpendiculairement au guide horizontal et mobile le long du guide horizontal, et dans lequel l'ensemble de récupération de produit (160) est mobile le long du guide vertical.

9. Mécanisme de distribution (180) selon la revendication 1, dans lequel le mécanisme d'entraînement (164) est disposé sous le godet (162).

10. Procédé de distribution d'un produit dans un distributeur automatique (100), consistant à :
déplacer un ensemble de récupération de produit (160) comprenant un godet (162) et un mécanisme d'entraînement (164) vers un emplacement d'un ensemble d'avancement sur lequel le produit est disposé ;
mettre en prise un accouplement de l'ensemble d'avancement (150) via le mécanisme d'entraînement (164) de l'ensemble de récupération de produit (160), dans lequel mettre en prise l'accouplement consiste à déplacer un bras mobile (166) de l'ensemble de récupération de produit (160) d'une position repliée à une position déployée dans laquelle un engrenage (169) du mécanisme d'entraînement (164) disposé sur le bras mobile (166) est mis en prise avec l'accouplement de l'ensemble d'avancement (150) en faisant tourner le bras mobile (166) autour d'un axe ;
faire avancer l'ensemble d'avancement (150) en entraînant l'ensemble d'avancement (150) avec le mécanisme d'entraînement (164) de l'ensemble de récupération de produit (160) pour déplacer le produit de l'ensemble d'avancement (150) jusque dans le godet (162) de l'ensemble de récupération de produit (160) ; et
déplacer l'ensemble de récupération de produit (160) et le produit vers un portique de distribution (116) du distributeur automatique (100).

11. Procédé selon la revendication 10, dans lequel déplacer l'ensemble de récupération de produit (160) vers l'emplacement du produit consiste à :
déplacer une vis-mère verticale le long d'une vis horizontale ;
déplacer l'ensemble de récupération de produit (160) le long de la vis verticale vers l'emplacement du produit.

12. Procédé selon la revendication 10, consistant en outre à recevoir une entrée utilisateur via une interface utilisateur, dans lequel l'entrée utilisateur correspond à une sélection d'un produit, à récupérer un emplacement du produit sélectionné à partir d'une mémoire qui stocke des informations de localisation de produit, et à déplacer l'ensemble de récupération de produit (160) vers l'emplacement.
